# EUROPEAN PATENT SPECIFICATION

(11) **EP 3 733 330 B1**
(45) Date of publication and mention of the grant of the patent: **04.09.2024**
(21) Application number: 18907279.6
(22) Date of filing: 21.12.2018
(51) Int. Cl.: B23B 3/30, B23B 21/00, B23Q 39/04

(54) **LATHE**
DREHBANK
TOUR

(30) Priority: 26.02.2018 JP 2018031965
(43) Date of publication of application: 04.11.2020
(73) Proprietor: Star Micronics Co., Ltd., Shizuoka-shi, Shizuoka 422-8654 (JP)
(72) Inventor: OTA, Rui, Shizuoka-shi, Shizuoka 422-8654 (JP)
(74) Representative: Manitz Finsterwald Patent- und Rechtsanwaltspartnerschaft mbB
(86) International application number: PCT/JP2018/047194
(87) International publication number: WO 2019/163280

(56) References cited:
- EP-A1- 1 270 146
- EP-A1- 1 632 309
- WO-A1-02/24386
- WO-A1-02/24386
- JP-A- H0 557 504
- JP-A- H08 118 203
- JP-A- H08 118 203
- JP-U- H 055 305

## Description

### TECHNICAL FIELD

The present invention relates to a lathe provided with a plurality of spindles.

### BACKGROUND ART

Such kind of lathe is known for example from Patent Documents 1 and 2. A well known NC (numerically control) lathe is provided with a front headstock provided with a front spindle, a guide bush supporting a workpiece protruded from the front spindle, a back headstock provided with a back spindle opposite the front spindle with the guide bush inbetween, and a plurality of tool posts working on the workpiece. The back spindle is movable in a control axis direction perpendicular to an axis of the back spindle and also perpendicular to an axis of the front spindle. The plurality of tool posts include a main tool post for use in cutting the front side of the workpiece protruded from the guide bush and a back tool post for use in cutting the back side of the workpiece held by the back spindle. The main tool post holds a plurality of tools arranged in the control axis direction. The main tool post is mounted on the supporting bed movably in the control axis direction. The supporting bed is is in a position in front of the front spindle and behind the front end of the workpiece protruded from the front spindle. The back tool post holds a plurality of tools arranged in the control axis direction. The tools held by the back tool post are in a position nearer the back spindle than the tools held by the main tool post are. There is a space between the supporting bed and the back tool post to allow movement of the main tool post.

The automatic lathe disclosed in Patent Document 3 comprises a first spindle linearly movable along a Z1-axis, a first tool post linearly movable along an X1-axis and a Y1-axis, a second spindle linearly movable along a Z2-axis and an X3-axis, and a second tool post linearly movable along an X2-axis. The whole structure is obliquely arranged. The X1-axis, the X2-axis, the X3-axis, and the Y1-axis each is not horizontal or vertical. The X1-axis, the X2-axis, and the X3-axis are parallel to each other while the Y1-axis is perpendicular to the X1-axis, the X2-axis, and the X3-axis.

### PRIOR ART DOCUMENT

### PATENT DOCUMENT

Patent Document 1: EP 1 632 309 A1
Patent Document 2: JP H08 118203 A1
Patent Document 3: WO 02/24386 A1

### TECHNICAL PROBLEM

Cut chips scattering from the workpiece likely accumulate in the large space between the supporting bed and the back tool post. An operator cannot readily collect the chips accumulated in the space. The chips scattering from the workpiece easily accumulate in the large space even if the whole structure of the lathe is obliquely arranged. The problem resides in a variety of lathes.

It is therefore an object of the invention to provide a lathe capable of facilitating the act of collecting the chips around the tool post.

### TECHNICAL SOLUTION

The object is solved by a lathe comprising the features of claim 1. Further aspects of the invention are defined in the dependent claims.

### ADVANTAGEOUS EFFECTS

The invention provides a lathe capable of facilitating the act of collecting the chips around the tool post.

### BRIEF DESCRIPTION OF THE DRAWINGS

FIG. 1 is a plan view schematically showing a configuration of a lathe.
FIG. 2 is a perspective view schematically showing an appearance of the lathe.
FIG. 3 is a side view schematically showing movement of a first tool post.
FIG. 4 is a side view schematically showing primary part of the lathe.
FIG. 5 is a front view schematically showing the lathe.
FIG. 6 is a block diagram schematically showing an electrical configuration of the lathe.
FIG. 7 is a side view schematically showing an operator of the lathe preparing the machine for operation.
FIG. 8 is a perspective view schematically showing an appearance of a lathe in a comparative example.
FIG. 9 is a side view schematically showing movement of a first tool post in the comparative lathe.
FIG. 10 is a front view schematically showing the comparative lathe.
FIG. 11 is a side view schematically showing an operator of the comparative lathe preparing the machine for operation.

### MODE FOR INVENTION

Hereinafter, an embodiment of the present invention will be described. The invention is not limited to the exemplary embodiment and the features disclosed herein are not necessarily essential to the invention.

### (1) Summary of inventive technology:

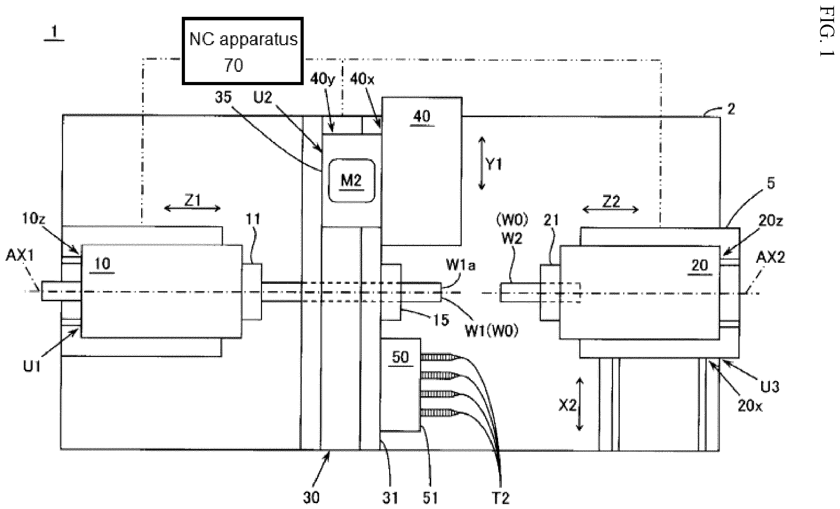

Technology of the invention will be described with reference to FIG. 1 to FIG. 11. The drawings only schematically show an example of the invention. They may have a mismatch to each other due to different maginification in each direction. Each element denoted by a symbol is only an example.

### (Embodiment 1)

As shown in FIG. 1 to FIG. 7, a lathe 1 of an embodiment of the invention may comprise a first headstock 10, a first tool post 40, a supporting bed 30, a first tool post driving unit U2, a second headstock driving unit U3, and a second tool post 50. The first headstock 10 may be provided with a first spindle 11 holding a workpiece W1. The first tool post 40 may hold a plurality of first tools T1 machining the workpiece W1 protruded from the first spindle 11. The supporting bed 30 may movably support the first tool post 40 on the side 31 of the supporting bed 30. The side 31 may be in a position in front of the first spindle 11 and behind a leading end W1a of the workpiece W1 protruded from the first spindle 11. The first tool post driving unit U2 may move the first tool post 40 in a first axis direction (a Y1-axis direction, for example) perpendicular to a spindle axis AX1 of the first spindle 11. A second headstock 20 may be provided with a second spindle 21 which receives the workpiece WO from the first spindle 11 in a position facing the first spindle 11. The second headstock driving unit U3 may move the second headstock 20 in a second axis direction (an X2-axis direction, for example) perpendicular to the spindle axis AX1 of the first spindle 11 and oblique to the first axis direction (the Y1-axis direction). The second tool post 50 may hold a second tool T2 machining a workpiece W2 held by the second spindle 21. The plurality of first tools T1 may be arranged in the first axis direction (the Y1-axis direction).

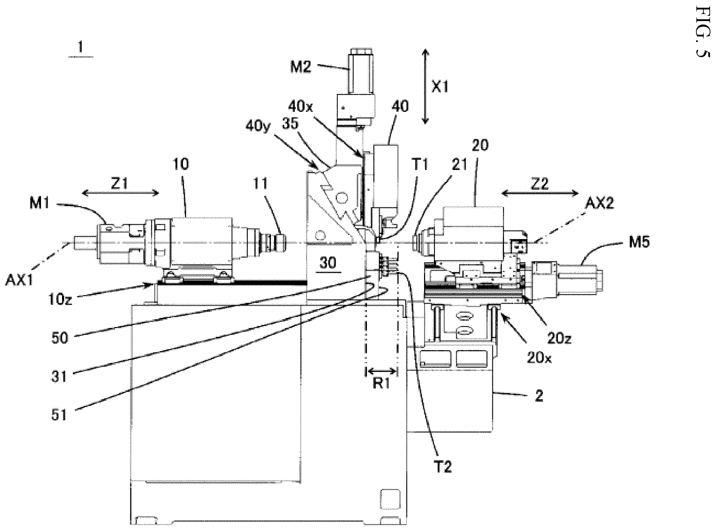

A direction perpendicular to the spindle axis AX1 of the first spindle 11 and perpendicular to the first axis direction (the Y1-axis direction) may be called a third axis direction (an X1-axis direction, for example). The second tool post 50 holding the second tool T2 may be in a position not overlapping the plurality of first tools T1 in the third axis direction (the X1-axis direction) and also in a position that the second tool T2 and part of the second tool post 50 on an extension of the second tool T2 (a range R1 in FIG. 5, for example) overlap the plurality of first tools T1 in the spindle axis direction of the first spindle 11 (a Z1-axis direction) .

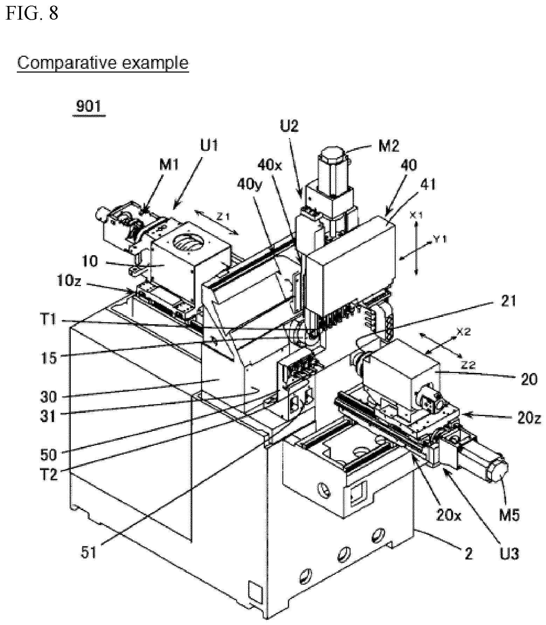

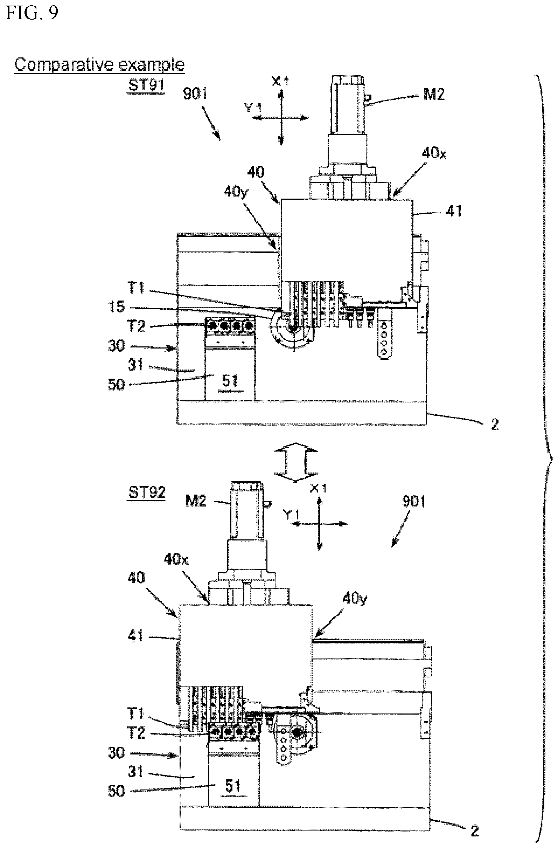

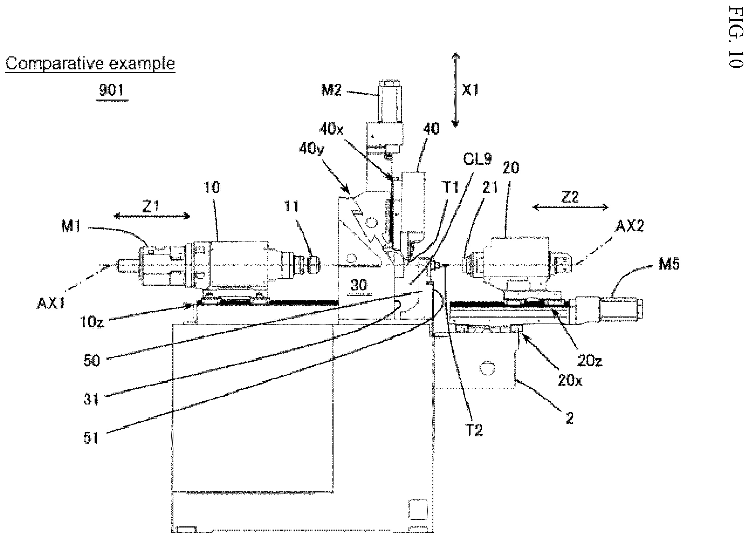

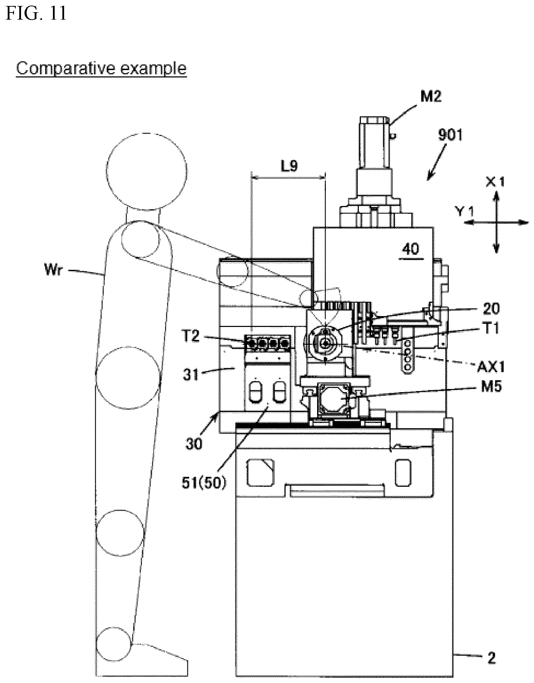

An NC lathe 901 of a comparative example is being described referring to FIG. 8 to FIG. 11. FIG. 8 schematically shows an appearance of the lathe 901. FIG. 9 schematically shows movement of the main tool post 40 of the lathe 901 seen from the Z1-axis direction. FIG. 10 schematically shows a front view of the lathe 901. FIG. 11 schematically shows an operator of the lathe 901 preparing the machine for operation. The lathe 901 comprises a front headstock 10, a guide bush 15, a back headstock 20, a main tool post 40, a supporting bed 30, a back tool post 50, and driving units U1 to U3, which are all mounted on a bed 2. The front headstock driving unit U1 comprises a feed mechanism 10z and a Z1-axis motor M1 to bidirectionally move the front headstock 10 provided with a front spindle 11 in the Z1-axis direction. The Z1-axis direction is a horizontal direction along the spindle axis AX1 of the front spindle 11. The main tool post driving unit U2 comprises feed mechanisms 40x, 40y, an X1-axis motor M2, and a Y1-axis motor (not shown) to bidirectionally move the main tool post 40 in the X1-axis and the Y1-axis directions. The X1-axis direction is a vertical direction perpendicular to the Z1-axis direction. The Y1-axis direction is a horizontal direction perpendicular to the Z1-axis and the X1-axis directions. The back headstock driving unit U3 comprises feed mechanisms 20x, 20z, an X2-axis motor (not shown), and a Z2-axis motor M5 to bidirectionally move the back headstock 20 provided with a back spindle 21 in the X2-axis and the Z2-axis directions. The Z2-axis direction is a horizontal direction along the spindle axis AX2 of the back spindle 21 and along the Z1-axis direction. The X2-axis direction is a horizontal direction along the Y1-axis direction and perpendicular to the Z2-axis direction. The supporting head 30 has a side 31 facing the back spindle 21. The main tool post 40 is mounted on the side 31 movably in the X1-axis and the Y1-axis directions. A plurality of first tools T1 are arranged in the Y1-axis direction on the lower surface of a body 41 of the main tool post 40. A plurality of second tools T2 are arranged in the X2-axis direction on a surface of the back tool post 50 facing the back spindle 21 (an opposite surface 51).

The FIG. 9 upper drawing shows a state (ST91) that the main tool post 40 is positioned on the furthest side (a right side of FIG. 9) from the back tool post 50 in a movable range in the Y1-axis direction. The FIG. 9 lower drawing shows another state (ST92) that the main tool post 40 is positioned on the closest side (a left side of FIG. 9) to the back tool post 50 in the movable range in the Y1-axis direction. The first tools T1 held by the body 41 of the main tool post 40 horizontally moving in the Y1-axis direction are arranged in a horizontal direction perpendicular to the Z1-axis direction. The second tools T2 held by the back tool post 50 are arranged in a horizontal direction perpendicular to the Z2-axis direction to be available for the workpiece held by the back spindle 21 horizontally moving in the X2-axis direction. When the main tool post 40 is moved toward the back tool post 50, there occurs an overlap between the first tools T1 and the second tools T2 as seen from the Z1-axis direction. As shown in FIG. 10, a clearance CL9 allowing passage of the first tools T1 held by the main tool post 40 is formed behind the back tool post 50 or between the side 31 of the supporting bed 30 and the back tool post 50.

In the clearance CL9 wide enough for passage of the first tools T1, cut chips scattering from the workpiece likely accumulate during operation by the main tool post 40. The accumulated chips are necessarily collected by any suitable means including a chip collection chute or a coolant. Further, the machining point of the main tool post 40 is distant from the machining point of the back tool post 50 in the Z1-axis and the Z2-axis directions by the width of the clearance CL9, which makes a stroke of the back headstock 20 longer. The longer stroke in the Z2-axis direction increases the size of the structure around the back headstock 20, the size of the whole machine, and eventually the cost of the machine. Further, since the second tools T2 are horizontally arranged toward an operator Wr from the spindle axis AX1 of the front spindle 11, the operator Wr cannot readily reach the guide bush 15 and therearound on the far side in preparing the machine for operation (FIG. 11).

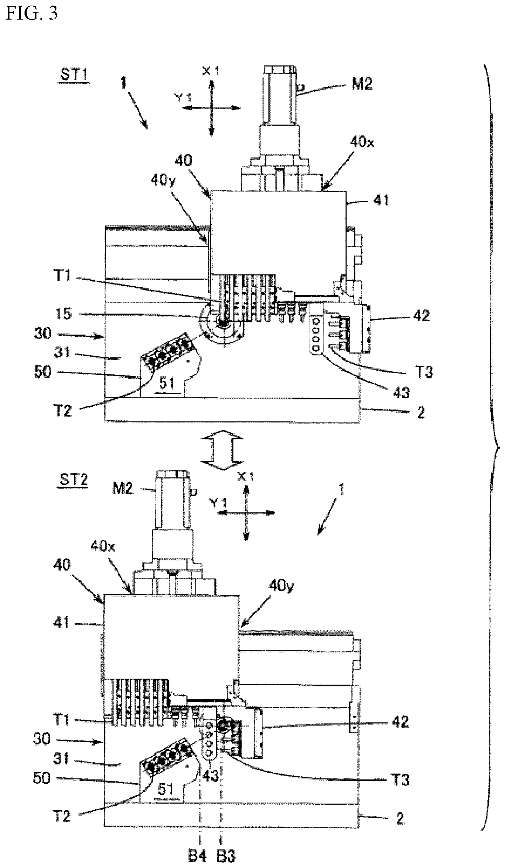

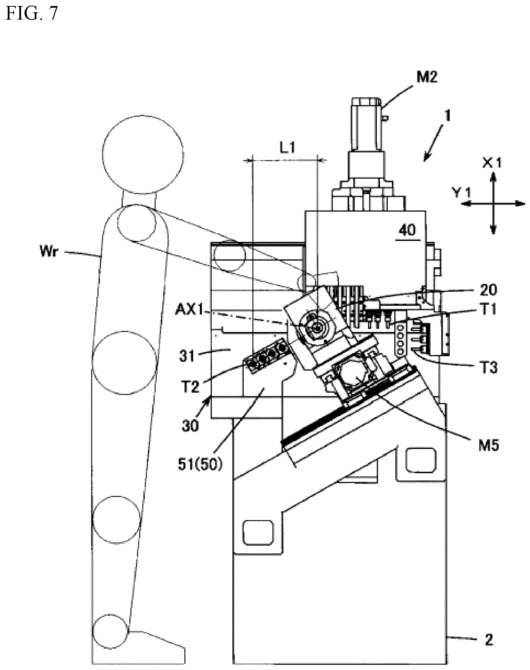

In the embodiment 1 of the invention, the second axis direction (the X2-axis direction) perpendicular to the spindle axis AX1 of the first spindle 11 may be oblique to the first axis direction (the Y1-axis direction) as shown in FIG. 3 and others. Accordingly, the second tool post 50 holding the second tool T2 may be in a position not overlapping the plurality of first tools T1 in the third axis direction (the X1-axis direction). Accordingly, the second tool T2 and part of the second tool post 50 on the extension of the second tool T2 (the range R1) may be in a position overlapping the plurality of first tools T1 in the spindle axis direction of the first spindle 11 (the Z1-axis direction) as shown in FIG. 5. The second tool post 50 may be in a position close to the side 31 of the supporting bed 30 for the first tool post 40. Scattered cut chips are prevented from entering between the side 31 of the supporting bed 30 and the second tool post 50. The embodiment 1 provides a lathe capable of facilitating the act of collecting the cut chips around the second tool post. Further, the second tool post provided close to the side 31 makes the stroke of the second headstock shorter. The shorter stroke in the Z2-axis direction decreases the size of the structure around the second headstock, the size of the whole machine, and eventually the cost of the machine. Further, since the second tools are in a position lower than the spindle axis of the first spindle, the operator can readily reach the guide bush and therearound on the far side in preparing the machine for operation as shown in FIG. 7. Further, when the plurality of second tools are arranged in the second axis direction, the horizontal distance between the second tool and the spindle axis of the first spindle (L1 in FIG. 7) is shorter than that of the comparative example (L9 in FIG. 11), which further improves working efficiency in preparing the machine for operation.

The first headstock may be movable in the spindle axis direction of the first spindle or may be unmovably mounted. The workpiece protruded from the first spindle may be supported with a guide bush or may not be supported. The tool or the tool unit having a tool may be held by the tool post. The first tool post may hold a tool different from the first tools arranged in the first axis direction. The supporting bed may support the guide bush or the first spindle. The second headstock driving unit may move the second headstock in the second axis direction or in the spindle axis direction of the second spindle. The second axis direction may be oblique to the first axis direction. That means that the second axis direction may not be along the first axis direction and not perpendicular to the first axis direction. The second tool post holding the second tools may not overlap the plurality of first tools in the third axis direction. That means that the second tools may not overlalp the plurality of first tools in the third axis direction and the second tool post excluding the second tools may not overlap the plurality of first tools in the third axis direction. The second tool post holding the second tool may be in a position that the second tool and part of the second tool post on the extension of the second tool overlap the plurality of first tools. That means that at least one of the following conditions is satisfied.
(Condition 1) The second tool overlaps the plurality of first tools in the spindle axis direction of the first spindle.
(Condition 2) Part of the second tool post on the extension of the second tool along the spindle axis direction of the first spindle overlaps the plurality of first tools in the spindle axis direction of the first spindle.

### (Embodiment 2)

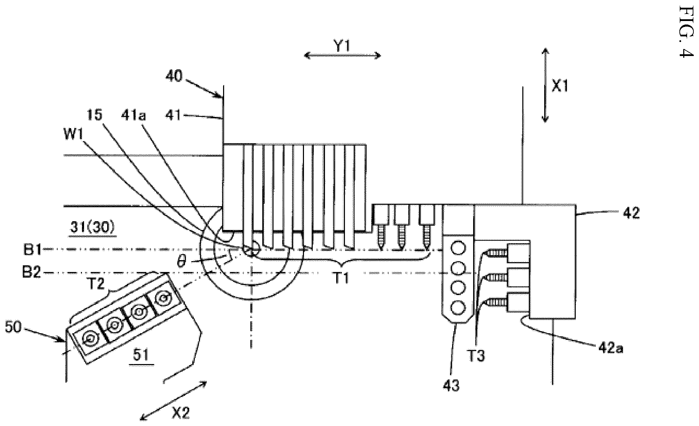

The first tool post 40 may hold a third tool T3 in a position not overlapping the second tool post 50 holding the second tool T2 in the first axis direction (the Y1-axis direction) as shown in FIG. 3. The second tool post 50 holding the second tool T2 may be in a position overlapping the third tool T3 in the third axis direction (the X1-axis direction) as shown in FIG. 3 and FIG. 4. The embodiment improves machining freedom while preventing an increase of the size of the machine.

### (Embodiment 3)

The lathe 1 may be further provided with the guide bush 15 supporting the workpiece W1 passed therethrough. The first tool post driving unit U2 may move the first tool post 40 in the third axis direction (the X1-axis direction) besides in the first axis direction (the Y1-axis direction). The embodiment improves machining freedom.

In the embodiment described below, the first headstock 10 may be represented by a front headstock. The first spindle 11 may be represented by a front spindle. The second headstock 20 may be represented by a back headstock. The second spindle 21 may be represented by a back spindle. The first tool post 40 may be represented by a main tool post. The second tool post 50 may be represented by a back tool post. The first tool post driving unit U2 may be represented by a main tool post driving unit. The second headstock driving unit U3 may be represented by a back headstock driving unit.

### (2) Hardware configuration of the lathe:

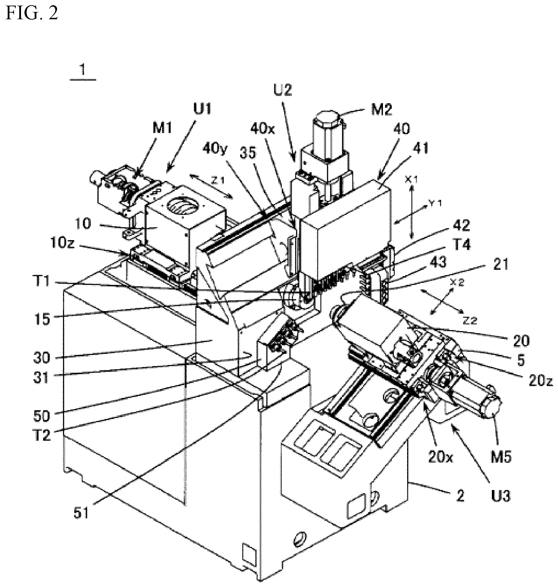

FIG. 1 schematically shows a configuration of an NC (numerical control) lathe of sliding headstock type. FIG. 2 schematically shows an appearance of the lathe 1. FIG. 3 schematically shows movement of the main tool post 40. FIG. 4 schematically shows primary part of the lathe 1. FIG. 5 schematically shows a front view of the lathe 1. The drawings each are only a simplified example for explanation and the invention is not limited thereto. A positional relation between elements is only an example for explanation. The left and right direction may be replaced by the up and down direction or the front and back direction. The up and down direction may be replaced by the left and right direction or the front and back direction. The front and back direction may be replaced by the left and right direction or the up and down direction. The rotational direction may be inversed. If something is the same as something in direction or position, they may be the same or not the same within an error range.

The lathe 1 may comprise a front headstock 10, a guide bush 15, a back headstock 20, a main tool post 40, a supporting bed 30, a back tool post 50, driving units U1 to U3, and an NC apparatus 70, which are all mounted on a bed 2. Primary part of the elements 2, 10, 20, 30, 40, 50, 15 and tools T1 to T4 each may be made of metal. The NC apparatus 70 may control the operation of the front headstock 10, the back headstock 20, the main tool post 40, and the driving units U1 to U3. The lathe 1 may have a control axis such as an X1-axis, Y1-axis, Z1-axis, X2-axis, and Z2-axis as shown in FIG. 2. The X1-axis direction may be a direction along the X1-axis. The Y1-axis direction may be a direction along the Y1-axis. The Z1-axis direction may be a direction along the Z1-axis. The X2-axis direction may be a direction along the X2-axis. The Z2-axis direction may be a direction along the Z2-axis. A workpiece WO may collectively represent a workpiece W1 for front-machining and a workpiece W2 for back-machining.

The front headstock 10 provided with a front spindle 11 may be movable on the bed 2 in the Z1-axis direction along the spindle axis AX1 of the front spindle 11. The Z1-axis direction shown in FIG. 2 is horizontal. The NC apparatus 70 may control the Z1-axis position of the front headstock 10 by the front headstock driving unit U1. The front spindle 11 may releasably hold the cylindrical bar workpiece W1 inserted in the Z1-axis direction with a collet (not shown) to rotate it on the spindle axis AX1 along the longitudinal direction of the workpiece W1.

The guide bush 15 may be mounted on the supporting bed 30 provided in front of the front spindle 11. The guide bush 15 provided in front of the front spindle 11 may slidably support the longitudinal workpiece W1 inserted in the Z1-axis direction and passed through the front spindle 11. The guide bush 15 may be rotated on the spindle axis AX1 in synchronization with the front spindle 11. The guide bush 15 may hold the workpiece W1 protruded from the front spindle 11 to prevent a bend of the long workpiece W1 in high precision machining.

The back headstock 20 provided with the back spindle 21 may be movable on the bed 2 in the Z2-axis direction along the spindle axis AX2 of the back spindle 21 and is movable in the X2-axis direction (an example of the second axis direction) perpendicular to the spindle axis AX2. The Z2-axis direction is along the Z1-axis direction. The Z2-axis direction shown in FIG. 2 is horizontal. The X2-axis direction is not along any of the X1-axis and Y1-axis directions along which the main tool post 40 is be movable. The X2-axis direction is oblique with respect to the horizontal Y1-axis direction ( the first direction) and also oblique with respect to the vertical X1-axis direction ( the third direction). The angle θ (FIG. 4) of the oblique X2-axis direction with respect to the horizontal Y1-axis direction may be 10 to 80 degrees and not limited thereto. It may be 20 to 70 degrees in a compact machine. It may be 40 degrees or less in a low-height machine.

The back spindle 21 is movable in the X2-axis direction passing the position facing the front spindle 11 with the guide bush 15 inbetween. The back spindle 21 may be bidirectionally movable in a descending area from the spindle axis AX1 of the front spindle 11 to this side in FIG. 2 (to the left in FIG.4) in the X2-axis direction. The NC apparatus 70 may control the X2-axis position and the Z1-axis position of the back headstock 20 by the back headstock driving unit U3. The back spindle 21 may receive the workpiece WO from the front spindle 11 in a position facing the front spindle 11 with the guide bush 15 inbetween. The back spindle 21 may releasably hold the cylindrical bar workpiece W2 inserted in the Z2-axis direction with a collet (not shown). The workpiece W2 whose front side has been worked may be, for example, cut off the long workpiece W1 with a cut-off tool attached to the main tool post 40. The back spindle 21 may rotate the workpiece W2 on the spindle axis AX2 along the longitudinal direction of the workpiece W2.

The main tool post 40 is movably mounted on a side 31 of the supporting bed 30 facing the back spindle 21. The main tool post 40 may be movable in the X1-axis and is movable in the Y1-axis directions perpendicular to the spindle axis AX1 of the front spindle 11. The X1-axis direcion ( the third axis direction) is a vertical direction perpendicular to the Z1-axis direction. The Y1-axis direction (the first axis direction) is a horizontal direction perpendicular to the Z1-axis direction and the X1-axis direction. The NC apparatus 70 may control the X1-axis position and the Y1-axis position of the main tool post 40 by the main tool post driving unit U2.

As shown in FIG. 2 and FIG. 4, the main tool post 40 may be a gang tool post comprising a body 41 holding a plurality of first tools T1, an extension 42 holding a plurality of third tools T3, and a branch 43 holding a plurality of forth tools T4. The body 41 may have a surface facing downwards (an opposite surface 41a) positioned opposite the back tool post 50 in the X1-axis direction. The plurality of first tools T1 arranged in the Y1-axis direction may be attached to the opposite surface 41a. The first tools T1 may include six turning tools and three drills in FIG. 4 but not limited thereto.

The extension 42 may be extended downwards in the X1-axis direction from part of the opposite surface 41a on the opposite side of the back tool post 50 (the right side in FIG. 4) with respect to the spindle axis AX1 of the front spindle 11 in the Y1-axis direction. The extension 42 may have an opposite surface 42a facing the back tool post 50 in the Y1-axis direction. The plurality of third tools T3 arranged in the X1-axis direction may be attached to the opposite surface 42a. The third tools T3 may include three drills in FIG. 4 but not limited thereto. As shown in FIG. 3 lower drawing, the plurality of third tools T3 may be in a Y1-axis position not overlapping the back tool post 50 having a plurality of second tools T2 even when the main tool post 40 is moved in the Y1-axis direction.

The branch 43 may protrude from the opposite surface 41a toward the back spindle 21 at a position between the first tools T1 and the extension 42 and then extend downwards in the X1-axis direction. The branch 43 may have a surface facing the side 31 of the supporting bed 30 in the Z1-axis direction where the plurality of forth tools T4 arranged in the X1-axis direction may be attached. The plurality of forth tools T4 may be in a Y1-axis position not overlapping the back tool post 50 holding a plurality of second tools T2 even when the main tool post 40 is moved in the Y1-axis direction. The branch 43 may also have a surface (not shown) facing the back spindle 21 in the Z1-axis direction. The plurality of forth tools T4 arranged in the X1-axis direction may be attached to the not-shown surface.

As described above, the main tool post 40 may hold the plurality of tools T1, T3, and T4 for machining the workpiece W1 protruded from the front spindle 11 and passed through the guide bush 15.

The supporting bed 30 may be unmovably fixed on the bed 2 between the front headstock 10 and the back headstock 20. The supporting bed 30 may extend upwards in the X1-axis direction to hold the guide bush 15 supporting the workpiece W1 passed therethrough. The side 31 of the supporting bed 30 facing the back spindle 21 may movably support the main tool post 40 and unmovably support the back tool post 50. The main tool post 40 may be movable in the X1-axis and the Y1-axis directions. The side 31 of the supporting bed 30 may be in a position in front of the front spindle 11 in the spindle axis direction of thereof (the Z1-axis direction) and behind the front end W1a of the workpiece W1 protruded from the front spindle 11 and passed through the guide bush 15.

The back tool post 50 may be unmovably fastened to the side 31 of the supporting bed 30. The back tool post 50 may have a surface (an opposite surface 51) facing the back spindle 21 on which a plurality of second tools T2 are arranged in the X2-axis direction. The second tools T2 may include four back-working drills as shown in FIG. 2 and FIG. 4 but not limited thereto. The back tool post 50 may hold a plurality of second tools T2 available for the workpiece W2 held by the back spindle 21.

The main tool post 40 and the back tool post 50 each may removably hold a tool unit having tools. The tool unit may be an example of a tool attached to the tool post. The lathe 1 may be provided with another tool post besides the tool posts 40 and 50.

As shown in FIG. 4 and FIG. 5, the back tool post 50 having the plurality of second tools T2 is in a position not overlapping the plurality of first tools T1 in the X1-axis direction. In FIG. 4, the upper limit (a boundary B2) of the back tool post 50 is in a position lower than the lower limit (a boundary B1) of the moving range of the plurality of first tools T1. The back tool post 50 is prevented from overlapping the plurality of first tools T1 as shown in FIG. 3 upper drawing (a state ST1).

In the state ST1, the main tool post 40 may be in the furthest position from the back tool post 50 in a movable range in the Y1-axis direction (to the right side of FIG. 3) . In another state ST2 shown in FIG. 3 lower drawing, the main tool post 40 may be in the closest position to the back tool post 50 in the movable range in the Y1-axis direction (to the left side of FIG. 3). The first tools T1 held by the body 41 of the main tool post 40 horizontally moving in the Y1-axis direction are arranged in a horizontal direction perpendicular to the Z1-axis direction. The second tools T2 held by the back tool post 50 are arranged in the X2-axis direction in a lower position than the first tools T1 in the X1-axis direction to be available for the workpiece held by the back spindle 21 moving downwards in the X2-axis direction toward this side. In a view from the Z1-axis direction, there is no overlap between the first tools T1 and the second tools T2 even when the main tool post 40 is moved toward the back tool post 50.

The back side of the back tool post 50 is attached to the side 31 of the supporting bed 30 without a space behind the back tool post 50 or between the back tool post 50 and the side 31 of the supporting bed 30 as shown in FIG. 5. When the back tool post 50 is attached there, the plurality of second tools T2 and part of the second tool post 50 on the extension of the second tools T2 (the range R1) overlap with the plurality of first tools in the Z1-axis direction. The range R1 may repesent a range between the back side of the back tool post 50 and the leading end of the second tool T2 in the Z1-axis direction. The first tools T1 are within the range R1. Accordingly, the plurality of second tools T2 and part of the second tool post 50 on the extension of the second tools T2 (the range R1) overlap with the plurality of first tools in the Z1-axis direction.

As shown in FIG. 3 lower drawing, the plurality of third tools T3 held by the extension 42 of the main tool post 40 may be in a position not overlapping the back tool post 50 in the Y1-axis direction even when the main tool post 40 is moved in the Y1-axis direction. A boundary B4 of the movable range of the back tool post 50 closest to the third tools T3 in the Y1-axis direction may be on the left side (in FIG. 3) of a boundary B3 of the movable range of the third tools T3 closest to the back tool post 50. There may be no overlap between the third tools T3 and the back tool post 50 holding a plurality of second tools T2.

Accordingly, as shown in FIG. 3 and FIG. 4, the back tool post 50 holding the second tools T2 may be arranged in a position overlapping the plurality of third tools T3 moving in the X1-axis direction. The plurality of third tools T3 may be in a lower position than the upper limit (the boundary B2) of the back tool post 50 holding the plurality of second tools T2. The back tool post 50 holding the second tools T2 may be in a position overlapping the plurality of third tools T3.

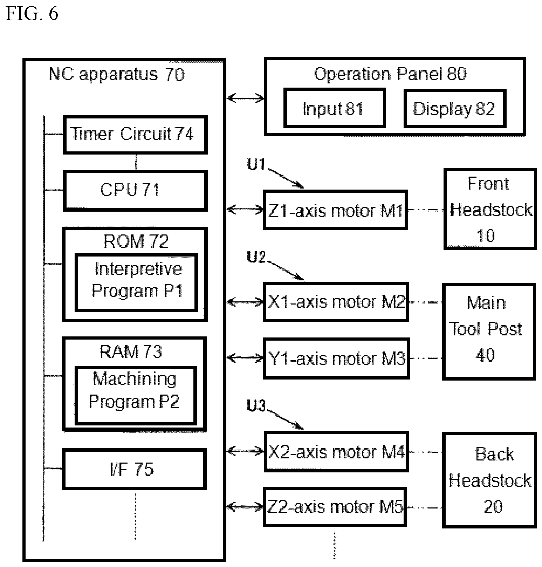

A driving system of the lathe 1 is being described. FIG. 6 schematically shows the electrical configuration in the NC lathe 1. The NC apparatus 70 may be connected to, for example, an operation panel 80, a Z1-axis motor M1, an X1-axis motor M2, a Y1-axis motor M3, an X2-axis motor M4, a Z2-axis motor M5, a driving motor (not shown) for the front spindle 11, a driving motor (not shown) for the back spindle 21, and a driving motor (not shown) for a rotary drill. The NC apparatus may comprise a CPU (Central Processing Unit) 71, a semiconductor memory including a ROM (Read Only Memory) 72 and a RAM (Random Access Memory) 73, a timer circuit 74, and an I/F (Interface) 75. The I/F 75 may collectively represent the interfaces of the operation panel 80 and the servo motors M1 to M5. The ROM 72 may store an interpretive program P1 to interpret and execute a machining program P2 written by a user. The RAM 73 may store the machining program P2. The machining program may be called an NC program. The CPU 71 may execute the interpretive program P1 stored in the ROM 72 using the RAM 73 as a working area. Whole or part of the functions available by the interpretive program P1 may be executed by ASIC (Application Specific Integrated Circuit) or something.

The operation panel 80 may comprise an input 81 and a display 82 for use as a user interface of the NC apparatus 70. The input 81 may comprise a botton and a touch panel through which an operator input is received. The display 82 may show, for example, an operator setting information and various information related to the NC lathe 1. The operator can store the machining program P2 in the RAM 73 by using the operation panel 80 or an external computer.

As shown in FIG. 2 and FIG. 6, the front headstock driving unit U1 may comprise a feed mechanism 10z and the Z1-axis motor M1 to bidirectionally move the front headstock 10 provided with the front spindle 11 in the Z1-axis direction. The feed mechanism 10z may comprise a pair of rails and a ball screw mounted on the bed 2 and a pair of guides and a nut fastened to the bottom of the front headstock 10. The pair of guides may be slidably engaged with the pair of rails. The nut may be engaged with the ball screw. When the ball screw is rotated by the Z1-axis motor M1 in response to a command from the NC apparatus 70, the front headstock 10 is moved in the Z1-axis direction on the bed 2. The feed mechanism 10z may use another slidable engagement structure such as a dovetail groove and a dovetail.

The main tool post driving unit U2 may comprise feed mechanisms 40x, 40y, the X1-axis motor M2, and the Y1-axis motor M3 to bidirectionally move the main tool post 40 in the X1-axis and Y1-axis directions. The feed mechanism 40x may comprise a dovetail groove and a ball screw provided on a slide bed 35 movable in the Y1-axis direction and a dovetail and a nut provided on the back side (facing the front headstock 10) of the main tool post 40. The dovetail may be engaged with the dovetail groove. The nut may be engaged with the ball screw. When the ball screw is rotated by the X1-axis motor M2 in response to a command from the NC apparatus 70, the main tool post 40 is moved in the X1-axis direction on the supporting bed 30 via the slide bed 35. The feed mechanism 40y may comprise a dovetail groove and a ball screw provided on upper portion of the side 31 of the supporting bed 30 and a dovetail and a nut provided on the back side (facing the front headstock 10) of slide bed 35. The dovetail may be engaged with the dovetail groove. The nut may be engaged with the ball screw. When the ball screw is rotated by the Y1-axis motor M3 in response to a command from the NC apparatus 70, the main tool post 40 together with the slide bed 35 is moved in the Y1-axis direction on the supporting bed 30. The feed mechanism 40x, 40y may use another slidable engagement structure such as a rail and a guide. The feed mechanism 40x may comprise a pair of rails and a ball screw mounted on the slide bed 35 and a guide and a nut fastened to the back side of the main tool post 40. The feed mechanism 40y may comprise a pair of rails and a ball screw mounted on upper portion of the side 31 of the supporting bed 30 and a guide and a nut fastened to the back side of the slide bed 35.

The back headstock driving unit U3 may comprise feed mechanisms 20x, 20z, the X2-axis motor M4, and the Z2-axis motor M5 to bidirectionally move the back headstock 20 provided with the back spindle 21 in the X2-axis and Z2-axis directions. The feed mechanism 20x may comprise a pair of rails and a ball screw mounted on the bed 2 and a pair of guides and a nut fastened to the bottom of a slide bed 5 movable in the X2-axis direction. The pair of guides may be slidably engaged with the pair of rails. The nut may be engaged with the ball screw. When the ball screw is rotated by the X2-axis motor M4 in response to a command from the NC apparatus 70, the back headstock 20 together with the slilde bed 5 is moved in the X2-axis direction on the bed 2. The feed mechanism 20z may comprise a pair of rails and a ball screw mounted on the slide bed 5 and a pair of guides and a nut fastened to the bottom of the back headstock 20. The pair of guides may be slidably engaged with the pair of rails. The nut may be engaged with the ball screw. When the ball screw is rotated by the Z2-axis motor M5 in response to a command from the NC apparatus 70, the back headstock 20 is moved in the Z2-axis direction on the bed 2 via the slide bed 5. The feed mechanism 20x, 20z may use another slidable engagement structure such as a dovetail groove and a dovetail. The feed mechanism 20x may comprise a dovetail groove and a ball screw provided on the bed 2 and a dove and a nut provided on the bottom of the slide bed 5. The feed mechanism 20z may comprise a dovetail groove and a ball screw provided on the slide bed 5 and a dove and a nut provided on the bottom of the back headstock 20.

An example of machining conrol is being described. Under control of the NC apparatus 70, the workpiece W1 held by the the front spindle 11 may be moved forward until the leading end W1a is protruded from the guide bush 15 by a predetermined amount. The front side of the workpiece W1 as rotated may be worked by a tool attached to the main tool post 40. Then, the back spindle 21 may be positioned opposite the front spindle 11 with the spindle axis AX2 aligned with the spindle axis AX1. The front spindle may be moved forward until the front-worked workpiece W2 is held by the back spindle 21. The workpiece W2 may be cut off the workpiece W1 by a cut-off tool of the main tool post 40. The back side of the workpiece W2 as rotated may be worked by the second tool T2 attached to the back tool post 50 as required. The back headstock 20 may be moved to a predetermined product discharge position to dischage the back-worked workpiece W2 or a product.

### (3) Operation, function, and effects of the lathe of the embodiment

As shown in comparative example in FIG. 8 to FIG. 11, when the main tool post 40 is moved toward the back tool post 50 in the Y1-axis direction where the X2-axis direction is a horizontal direction along the Y1-axis direction, there happens an overlap between the first tool T1 of the main tool post 40 and the second tool T2 of the back tool post 50 (ST92 in FIG. 9). The clearance CL9 is formed between the side 31 of the supporting bed 30 and the back tool post 50 to allow passage of the first tool T1 held by the main tool post 40. Cut chips scattered from the workpiece can accumulate in the clearance CL9. In the embodiment as shown in FIG. 1 to FIG. 6 where the X2-axis direction perpendicular to the spindle axis AX1 of the first spindle 11 is oblique to the horizontal Y1-axis direction, the back tool post 50 holding the plurality of second tools T2 can be in a position not overlapping the plurality of first tools T1 in the vertical X1-axis direction (ST2 in FIG. 3). Accordingly, the plurality of second tools T2 and part of the second tool post 50 on the extension of the second tools T2 (the range R1) may be in a position overlapping the plurality of first tools T1 in the Z1-axis direction (FIG. 5).

The back tool post 50 is mounted on the side 31 of the supporting bed 30. No clearance is formed on the back side of the back tool post 50. Cut chips accumulation is prevented, which improves chips collection performance. The embodiment facilitates the act of colecting cut chips around the back tool post.

Since no clearance is formed on the back side of the back tool post 50, the machining point of the main tool post 40 is brought near the machining point of the back tool post 50, making the stroke of the back headstock 20 shorter in the Z2-axis direction. The embodiment downsizes a structure around the back headstock 20 and further the whole machine and thereby reduces the cost.

In comparative example in FIG. 11 where the second tools T2 are horizontally arranged toward an operator Wr from the spindle axis AX1 of the front spindle 11, the operator Wr cannot readily reach the guide bush 15 and therearound on the far side due to the second tools T2 lying on this side. In the embodiment in FIG. 7 where the second tools T2 are arranged in the lower position than the spindle axis AX1 of the front spindle 11, the operator Wr can readily reach the guide bush 15 and therearound, which improves working efficiencey. The horizontal distance L1 in FIG. 7 from the position of the second tools T2 to the spindle axis AX1 of the front spindle 11 is shorter than the horizontal distance L9 in FIG. 11. This also contributes to improvement of working efficiency in preparing the machine for operation.

### (4) Modifications:

The invention may be embodied in a variety of modifications.

In a lathe not provided with a guide bush, a workpiece held by a spindle may be machined without support of the guide bush.

In a lathe where the front headstock is not moved in the Z1-axis direction, the workpiece held by the back spindle whose axis is aligned with the axis of the front spindle may be moved in the Z1-axis direction when the back headstock is moved in the Z2-axis direction. In a lathe where the back headstock is not moved in the Z2-axis direction, the workpiece held by the front spindle whose axis is aligned with the axis of the back spindle may be moved in the Z2-axis direction when the front headstock is moved in the Z1-axis direction. In a lathe where the main tool post is not moved in the X1-axis direction, the workpiece may be cut when the front headstock is moved in the X1-axis direction. The modifications may be all included in the technology of the invention.

The main tool post may not have at least one of the third tool T3 and the forth tool T4. The embodiment has an effect of facilitating the act of collecting chips around the back tool post.

### (5) Conclusion:

As described above, the invention provides a lathe capable of facilitating the act of collecting chips acound the back tool post. The essential operations and effects of the invention may be available even from only the elements of independent claims.

### DESCRPTION OF SYMBOLS

- 1: lathe
- 2: bed
- 10, 20: headstock
- 10z, 20x, 20z: feed mechanism
- 11,21: spindle
- 15: guide bush
- 30: supporting bed
- 31: side of the supporting bed
- 40, 50: tool post
- 40x, 40y: feed mechanism
- 41: body
- 42: extension
- 41a, 42a, 51: opposite surface
- AX1, AX2: spindle axis
- B1 to B4: boundary
- R1: range
- T1 to T4: tool
- U2: tool post driving unit
- U3: headstock driving unit
- WO, W1, W2: workpiece
- W1a: front end

## Claims

1. A lathe (1) comprising:
a first headstock (10) provided with a first spindle (11) for holding a workpiece (W0, W1, W2),
a second headstock (20) provided with a second spindle (21) which can receive the workpiece (W0, W1, W2) from the first spindle (11) in a position facing the first spindle (11),
a first tool post (40) which holds a plurality of first tools (T1) for machining the workpiece (W0, W1, W2) when protruding from the first spindle (11),
a second tool post (50) which holds a second tool (T2) for machining the workpiece (W0, W1, W2) when held by the second spindle (21),
a supporting bed (30) whose side (31) facing the second spindle (21) movably supports the first tool post (40) and unmovably supports the second tool post (50), the side (31) being in a position in front of the first spindle (11) and behind the front end (Wla) of the workpiece (W0, W1, W2) protruding from the first spindle (11);
a first tool post driving unit (U2) which can move the first tool post (40) in a first axis (Y1) direction perpendicular to an axis (AX1) of the first spindle (11), wherein the first axis (Y1) direction is a horizontal direction, and
a second headstock driving unit (U3) which can move the second headstock (20) in a second axis (X2) direction perpendicular to the axis (AX1) of the first spindle (11) and oblique to the first axis (Y1) direction,
wherein the plurality of first tools (T1) are arranged in the first axis (Y1) direction, and
the second tool post (50) holding the second tool (T2) is in a position not overlapping the plurality of first tools (T1) in a third axis (X1) direction perpendicular to the axis (AX1) of the first spindle (11) and perpendicular to the first axis (Y1) direction and in a position that the second tool (T2) and part of the second tool post (50) on an extension of the second tool (T2) overlap the plurality of first tools (T1) in a direction (Z1) of the axis (AX1) of the first spindle (11), wherein the third axis (X1) direction is a vertical direction.

2. The lathe (1) of claim 1, wherein the the first tool post (40) holds a third tool (T3) in a position not overlapping the second tool post (50) holding the second tool (T2) in the first axis (Y1) direction, and the second tool post (50) holding the second tool (T2) is in a position overlapping the third tool (T3) in the third axis (X1) direction.

3. The lathe (1) of claim 1 or 2, wherein the lathe (1) may further comprise a guide bush (15) for supporting the workpiece (W0, W1, W2) passed therethrough, and the first tool post driving unit (U2) can move the first tool post (40) in the third axis (X1) direction besides in the first axis (Y1) direction.

## Patentansprüche

1. Drehmaschine (1), umfassend:
einen ersten Spindelstock (10), der mit einer ersten Spindel (11) zum Halten eines Werkstücks (W0, W1, W2) versehen ist,
einen zweiten Spindelstock (20), der mit einer zweiten Spindel (21) versehen ist, die das Werkstück (W0, W1, W2) von der ersten Spindel (11) in einer der ersten Spindel (11) zugewandten Position aufnehmen kann,
einen ersten Werkzeugständer (40), der eine Vielzahl von ersten Werkzeugen (T1) zum Bearbeiten des Werkstücks (W0, W1, W2) hält, wenn er von der ersten Spindel (11) vorsteht,
einen zweiten Werkzeugständer (50), der ein zweites Werkzeug (T2) zum Bearbeiten des Werkstücks (W0, W1, W2) hält, wenn er von der zweiten Spindel (21) gehalten wird,
ein Stützbett (30), dessen der zweiten Spindel (21) zugewandte Seite (31) den ersten Werkzeugständer (40) beweglich stützt und den zweiten Werkzeugständer (50) unbeweglich stützt, wobei sich die Seite (31) in einer Position vor der ersten Spindel (11) und hinter dem vorderen Ende (W1a) des Werkstücks (W0, W1, W2) befindet, das von der ersten Spindel (11) vorsteht;
eine erste Werkzeugständerantriebseinheit (U2), die den ersten Werkzeugständer (40) in einer Richtung der ersten Achse (Y1) senkrecht zu einer Achse (AX1) der ersten Spindel (11) bewegen kann, wobei die Richtung der ersten Achse (Y1) eine horizontale Richtung ist, und
eine zweite Spindelstockantriebseinheit (U3), die den zweiten Spindelstock (20) in einer Richtung der zweiten Achse (X2) senkrecht zu der Achse (AX1) der ersten Spindel (11) und schräg zu der Richtung der ersten Achse (Y1) bewegen kann,
wobei die Vielzahl von ersten Werkzeugen (T1) in der Richtung der ersten Achse (Y1) angeordnet ist, und
der zweite Werkzeugständer (50), der das zweite Werkzeug (T2) hält, sich in einer Position befindet, die die Vielzahl von ersten Werkzeugen (T1) in einer Richtung der dritten Achse (X1) senkrecht zu der Achse (AX1) der ersten Spindel (11) und senkrecht zu der Richtung der ersten Achse (Y1) nicht überlappt, und sich in einer Position befindet, dass das zweite Werkzeug (T2) und ein Teil des zweiten Werkzeugständers (50) auf einer Verlängerung des zweiten Werkzeugs (T2) die Vielzahl von ersten Werkzeugen (T1) in einer Richtung (Z1) der Achse (AX1) der ersten Spindel (11) überlappen, wobei die Richtung der dritten Achse (X1) eine vertikale Richtung ist.

2. Drehmaschine (1) nach Anspruch 1, wobei der erste Werkzeugständer (40) ein drittes Werkzeug (T3) in einer Position hält, die den zweiten Werkzeugständer (50), der das zweite Werkzeug (T2) hält, in der Richtung der ersten Achse (Y1) nicht überlappt, und der zweite Werkzeugständer (50), der das zweite Werkzeug (T2) hält, sich in einer Position befindet, die das dritte Werkzeug (T3) in der Richtung der dritten Achse (X1) überlappt.

3. Drehmaschine (1) nach einem der Ansprüche 1 oder 2, wobei die Drehmaschine (1) ferner eine Führungsbuchse (15) zum Tragen des Werkstücks (W0, W1, W2), das durch sie geführt wird, umfassen kann, und die erste Werkzeugständerantriebseinheit (U2) den ersten Werkzeugständer (40) neben der Richtung der ersten Achse (Y1) in der Richtung der dritten Achse (X1) bewegen kann.

## Revendications

1. Tour (1) comprenant :
une première poupée fixe (10) dotée d'une première broche (11) destinée à tenir une pièce à oeuvrer (W0, W1, W2),
une seconde poupée fixe (20) dotée d'une seconde broche (21) qui peut recevoir la pièce à oeuvrer (W0, W1, W2) depuis la première broche (11) dans une position faisant face à la première broche (11),
un premier porte-outils (40) qui tient une pluralité de premier outils (T1) destinés à usiner la pièce à oeuvrer (W0, W1, W2) quand elle se projette depuis la première broche (11),
un second porte-outil (50) qui tient un deuxième outil (T1) destiné à usiner la pièce à oeuvrer (W0, W1, W2) quand elle est tenue par la seconde broche (21),
un lit de support (30) dont un côté (31) faisant face à la seconde broche (21) supporte de manière mobile le premier porte-outils (40) et supporte de manière non mobile le second porte-outil (50), le côté (31) étant dans une position à l'avant de la première broche (11) et à l'arrière de l'extrémité avant (W1a) de la pièce à oeuvrer (W0, W1, W2) se projetant depuis la première broche (11) ;
une unité d'entraînement de premier porte-outils (U2) qui peut déplacer le premier porte-outils (40) dans une direction d'un premier axe (Y1) perpendiculaire à un axe (AX1) de la première broche (11), la direction du premier axe (Y1) étant une direction horizontale, et
une unité d'entraînement de seconde poupée fixe (U3) qui peut déplacer la seconde poupée fixe (20) dans une direction d'un second axe (X2) perpendiculaire à l'axe (AX1) de la première broche (11) et en oblique par rapport à la direction du premier axe (Y1),
dans lequel la pluralité de premiers outils (T1) sont agencés dans la direction du premier axe (Y1), et
le second porte-outil (50) tenant le second outil (T2) est dans une position qui n'est pas en chevauchement avec la pluralité de premiers outils (T1) dans une direction d'un troisième axe (X1) perpendiculaire à l'axe (AX1) de la première broche (11) et perpendiculaire à la direction du premier axe (Y1) et dans une position dans laquelle le deuxième outil (T2) et une partie du second porte-outil (50) sur une extension du deuxième outil (T2) sont en chevauchement avec la pluralité de premiers outils (T1) dans une direction (Z1) de l'axe (AX1) de la première broche (11), la direction du troisième axe (X1) étant une direction verticale.

2. Tour (1) selon la revendication 1, dans lequel le premier porte-outils (40) tient un troisième outil (T3) dans une position n'étant pas en chevauchement avec le second porte-outil (50) tenant le deuxième outil (T2) dans la direction du premier axe (Y1), et le second porte-outil (50) tenant le deuxième outil (T2) est dans une position en chevauchement avec le troisième outil (T3) dans la direction du troisième axe (X1).

3. Tour (1) selon la revendication 1 ou 2, dans lequel le tour (1) peut en outre comprendre une douille de guidage (15) destinée à supporter la pièce à oeuvrer (W0, W1, W2) passée à travers elle, et l'unité d'entraînement de premier porte-outils (U2) peut déplacer le premier porte-outils (40) dans la direction du troisième axe (X1) en plus de la direction du premier axe (Y1).
